# EUROPÄISCHE PATENTANMELDUNG

(11) **EP 3 279 057 A1**
(43) Veröffentlichungstag der Anmeldung: **07.02.2018**
(21) Anmeldenummer: 17183070.6
(22) Anmeldetag: 25.07.2017
(51) Int. Cl.: B62B 5/00, B62B 3/02, B62B 9/26

(54) **WAREN- UND KINDERTRANSPORTSYSTEM**

(30) Priorität: 04.08.2016 DE 102016114473
(71) Anmelder: Luki UG, 24937 Flensburg (DE)
(72) Erfinder: Ertelt, Ramona, 24937 Flensburg (DE)
(74) Vertreter: Lobemeier, Martin Landolf

(57) **Zusammenfassung**

Waren- und Kindertransportsystem (10) für den Einkauf bestehend aus einem Kinderwagen (100) mit einem Kinderwagenfahrgestell (110); einer in Fahrtrichtung am Kinderwagenfahrgestell (110) angeordneten Sitz- und/oder Liegefläche (120) zur Aufnahme eines Kindes; und einem mit dem Kinderwagenfahrgestell (110) verbundenen Kinderwagengriff (130); einem mit dem Kinderwagen (100) entgegen der Fahrtrichtung lösbar zu befestigenden Einkaufswagenfahrgestell (210), das zusammenklappbar ausgebildet und zur Aufnahme eines Einkaufskorbs (220) eingerichtet ist; und einem zur Aufnahme am Einkaufswagenfahrgestell (210) eingerichteten, mit einem Einkaufskorbgriff versehenen Einkaufskorb (220), wobei der Kinderwagengriff (130) den Lenker des Waren- und Kindertransportsystems (10) bildet und der Einkaufswagen (200) bei Bewegung des Waren- und Kindertransportsystems (10) in Fahrtrichtung vom Kinderwagen (100) gezogen wird.

## Beschreibung

Die Erfindung betrifft ein Waren- und Kindertransportsystem für den Einkauf bestehend aus einem Kinderwagen und einem mit dem Kinderwagen lösbar befestigten Einkaufswagen.

Für das Einkaufen mit Kindern sind bereits verschiedene Systeme bekannt, die einerseits die Beförderung der Kinder und andererseits den Transport der Waren ermöglichen:
Neben den bei klassischen Einkaufswagen hinlänglich bekannten Klappkindersitzen sind auch als Einkaufskinderautos ausgebildete Einkaufswagen bekannt, die auf einem Fahrgestell einen Sitzplatz für Kleinkinder im lauffähigen Alter und einen mit dem Fahrgestell fest verbundenen Einkaufskorb aufweisen.

Der Vorteil dieser Einkaufswagen ist, dass die Kinder selbständig in den Einkaufwagen ein-und aus diesem auch wieder aussteigen können, wobei der Einkauf spielerisch erlebt wird und daher nicht langweilig wird. Nachteilig daran sind jedoch der große Platzbedarf dieser Art Einkaufswagen und deren eingeschränkte Verwendung, die beispielsweise für Kinder im Säuglingsalter keine Anwendung findet.

Für Kinder im Säuglingsalter wird daher eine weitere Art von Einkaufswagen verwendet, an denen Liegeschalen befestigt sind, die den herkömmlichen Komfort eines Einkaufswagens mit dem Transport des Säuglings verbinden. Nachteilig an diesen Systemen jedoch ist, dass diese regelmäßig nur dann benutzt werden, wenn die Kunden mit dem Auto zum Einkaufen fahren und ein eigener Kinderwagen nicht mitgeführt wird.

Tatsächlich wird in den meisten Fällen jedoch ein eigener Kinderwagen mitgeführt, sodass der Kunde mit Kind - oft nur ein Elternteil alleine - mit dem Problem konfrontiert ist, entweder den Kinderwagen vor dem Geschäft unbeaufsichtigt abzustellen oder die einzukaufende Ware auf dem Kinderwagen abzulegen.

Zwar sind bereits Haltesysteme bekannt, mit denen man einen Einkaufskorb mittels Haken am Lenker des Kinderwagens befestigen kann. Dieses birgt jedoch die Gefahr, dass der Kinderwagen bei schwerem Einkauf instabil wird und umzukippen droht.

Daher wurde bereits unter der Internetadresse https://crowdlynx.com/de/idea/einkaufswagenkoppelbar-mit-kinderwagen (abgerufen am 30.07.2016) vorgeschlagen, einen Kinderwagen mit einem Einkaufswagen zu einem kombinierten Waren- und Kindertransportsystem zu koppeln. Der Einkaufswagen wird dabei vor den Kinderwagen gestellt und mit diesem mithilfe eines Bands lösbar verbunden. Dabei wird der Einkaufswagen mittels der am Einkaufswagen vorgesehenen Handgriffe geschoben und gelenkt, wobei durch Schieben und Lenken des Einkaufswagens auch der Kinderwagen geschoben und gelenkt wird.

Nachteilig an diesem Aufbau ist jedoch, dass sich die durch den Einkaufwagen bewirkte Lenkung nur ungenügend auf den Kinderwagen überträgt und daher für den Gebrauch in den Gängen eines Supermarkts nicht geeignet ist.

Darüber hinaus sind aus GB 2 403 458 A, JP 2009-190716 A, WO00/46091 A1, GB 2 506 941 A und US 9 308 928 B2 weitere Systeme bekannt, die für den Einkauf mit einem Kinderwagen gedacht sind. Diese haben jedoch den Nachteil, dass für den Einzelhändler nicht nur erhebliche Investitionen für die Anschaffung eines zusätzlichen Einkaufssystems getätigt werden müssen, sondern auch weiterer Platz vorgehalten werden muss, um diese zu Systeme anbieten zu können. Aufgrund des geringen Platzangebots innerhalb des Einzelhandels und der bevorzugten Verwendung als Verkaufsfläche statt Abstellfläche für Einkaufssysteme haben sich die bekannten Systeme nicht durchsetzen können.

Aufgabe der Erfindung ist es daher, ein Waren- und Kindertransportsystem für den Einkauf bestehend aus einem Kinderwagen und einem mit dem Kinderwagen lösbar befestigten Einkaufswagen zu schaffen, das leicht zu lenken und für die Verwendung in Supermärkten geeignet ist.

Diese Aufgabe wird erfindungsgemäß durch das Waren- und Kindertransportsystem mit den Merkmalen von Anspruch 1 gelöst. Die Unteransprüche geben vorteilhafte Ausgestaltungen der Erfindung wieder.

Der Grundgedanke der Erfindung besteht darin, weitgehend auf bereits vorhandene Systeme für den Warentransport innerhalb eines Supermarkts zurückzugreifen und damit den zusätzlich benötigten Platzbedarf für ein kombiniertes Waren- und Kindertransportsystem auf ein Minimum zu reduzieren. So ist es für die Ausführung der Erfindung lediglich notwendig ein zusammenklappbar ausgestaltetes Einkaufswagenfahrgestell zu schaffen, das zur Aufnahme von ohnehin im Einzelhandel vorhandenen Einkaufskörben und zur Befestigung an einem Kinderwagen eingerichtet ist. Die zusammengeklappten Einkaufswagenfahrgestelle können aufrecht, bevorzugt an einem entsprechenden Halter platzsparend gelagert werden, sodass die Verkaufsfläche im Wesentlichen nicht eingeschränkt werden muss.

Darüber hinaus können bei bevorzugter Ausgestaltung die aus Einkaufswagenfahrgestell und Einkaufskorb gebildeten Einkaufswagen auch ohne Kinderwagen verwendet werden, sodass sich bei Austausch von vorhandenen Einkaufswagen ein synergistischer Effekt dahingehend ergibt, dass das erfindungsgemäß vorgesehene Waren- und Kindertransportsystem aufgrund der Klappbarkeit weniger Platz in Anspruch nimmt, auf die ohnehin vorhandenen Einkaufskörbe zurückgegriffen und auch von Müttern mit Kindern im Kinderwagen benutzt werden kann.

Erfindungsgemäß ist also ein Waren- und Kindertransportsystem für den Einkauf vorgesehen, bestehend aus einem Kinderwagen mit einem Kinderwagenfahrgestell, einer in Fahrtrichtung am Kinderwagenfahrgestell angeordneten Sitz- und/oder Liegefläche zur Aufnahme eines Kindes, und einem mit dem Kinderwagenfahrgestell verbundenen Kinderwagengriff; einem mit dem Kinderwagen entgegen der Fahrtrichtung lösbar zu befestigenden Einkaufswagenfahrgestell, das zusammenklappbar ausgebildet und zur Aufnahme eines Einkaufskorbs eingerichtet ist; und einem zur Aufnahme am Einkaufswagenfahrgestell eingerichteten, mit einem Einkaufskorbgriff versehenen Einkaufskorb, wobei der Kinderwagengriff den Lenker des Waren- und Kindertransportsystems bildet und der Einkaufswagen bei Bewegung des Waren- und Kindertransportsystems in Fahrtrichtung vom Kinderwagen gezogen wird.

Der Einkaufskorb ist bevorzugt stapelbar eingerichtet.

Bevorzugt weist auch der Einkaufswagen einen mit dem Einkaufswagengestell verbundenen Einkaufswagengriff auf, sodass ein eigenständiger Einkaufswagen erhalten wird, der auch ohne Kombination mit einem Kinderwagen verwendet werden kann.

Bevorzugt wird das Waren- und Kindertransportsystem durch Verbindung des Einkaufswagengriffs mit dem Kinderwagengriff mittels Verschränken der beiden Griffe miteinander gebildet, sodass in diesem Fall auf ein zusätzliches Verbindungsmittel verzichtet werden kann.

Insbesondere sind der Kinderwagengriff und/oder der Einkaufswagengriff als Bügel ausgebildet.

Weiter ist bevorzugt ein am Einkaufswagengriff angeordnetes, den Kinderwagengriff am Einkaufswagengriff fixierendes Arretierungsmittel vorgesehen. Dieses kann besonders bevorzugt als um eine Achse drehbar angeordneter Riegel ausgebildet sein.

Alternativ kann natürlich auch ein Verbindungsmittel zur lösbaren Befestigung des Einkaufswagens am Kinderwagen vorgesehen sein.

Der Kinderwagen des Systems ist als Kombi-Kinderwagen, Buggy, Roller-Buggy, Reha-Buggy, Krippenwagen oder Rehawagen ausgebildet.

Schließlich ist bevorzugt vorgesehen, dass das Waren- und Kindertransportsystem auch eine Korbstapeleinrichtung zum Bereithalten von Einkaufskörben und/oder eine Halterung zum Vorhalten zusammengeklappter Einkaufswagenfahrgestelle aufweist.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: eine perspektivische Ansicht eines besonders bevorzugt ausgestalteten Systems nach der Erfindung;
- Fig. 2: eine Seitenansicht des besonders bevorzugt ausgestalteten Systems nach der Erfindung vor der Arretierung des Einkaufswagens am Kinderwagen; und
- Fig. 3: eine Seitenansicht des besonders bevorzugt ausgestalteten Systems nach der Erfindung mit am Kinderwagen arretierten Einkaufswagen.

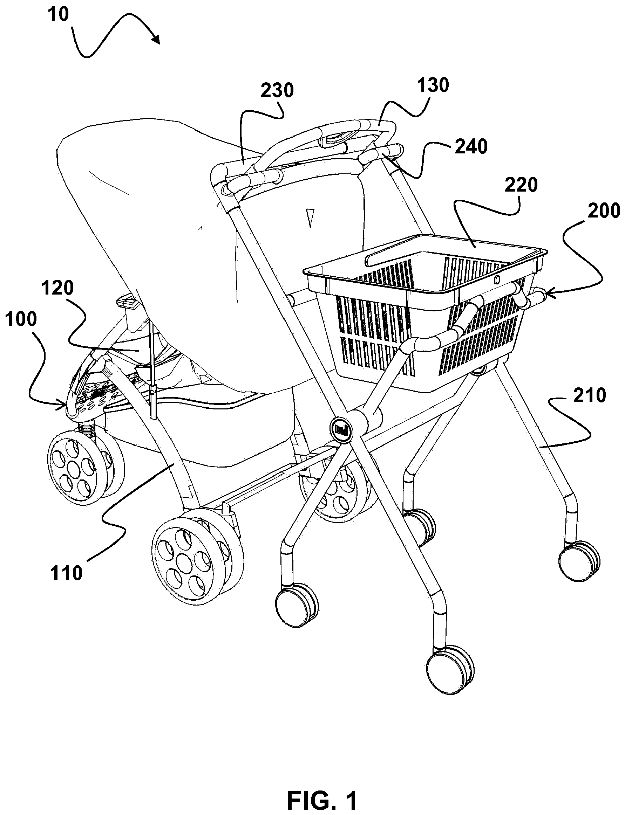

Fig. 1 zeigt eine perspektivische Ansicht eines besonders bevorzugt ausgestalteten Waren-und Kindertransportsystems nach der Erfindung.

Insbesondere zeigt Fig. 1 ein Waren- und Kindertransportsystem 10 für den Einkauf von Mitteln des täglichen Bedarfs bestehend aus einem Kinderwagen 100 mit einem Kinderwagenfahrgestell 110, einer in Fahrtrichtung am Kinderwagenfahrgestell 110 angeordneten Sitz- und/oder Liegefläche 120 zur Aufnahme eines Kindes und einem mit dem Kinderwagenfahrgestell 110 verbundenen Kinderwagengriff 130. Das Waren- und Kindertransportsystem 10 weist darüber hinaus einen mit dem Kinderwagen 100 lösbar befestigten Einkaufswagen 200 mit einem Einkaufswagenfahrgestell 210, einem am Einkaufswagenfahrgestell 210 angeordneten Einkaufskorb 220 zur Aufnahme von Waren und einem mit dem Einkaufswagengestell 210 verbundenen Einkaufswagengriff 230 auf.

Durch die besondere Ausgestaltung der Griffe 130, 230 von Kinderwagen 100 und Einkaufswagen 200 ist ein Verbindungsmittel zur lösbaren Befestigung des Einkaufswagens 200 am Kinderwagen 100 geschaffen, sodass der Kinderwagengriff 130 den Lenker des Waren- und Kindertransportsystems 10 bildet, wobei der Einkaufswagen 200 bei Bewegung des Waren- und Kindertransportsystems 10 in Fahrtrichtung vom Kinderwagen 100 gezogen wird.

Speziell sind der Kinderwagengriff 130 und der Einkaufswagengriff 230 miteinander verschränkt. Dieses wird dadurch erreicht, dass der als Bügel ausgebildete Einkaufswagengriff 230 breiter als der als Bügel ausgebildete Kinderwagengriff 130, nicht aber höher ist.

Wird der Einkaufswagengriff 230 nun über den Kinderwagengriff 130 gehoben, wird der Einkaufswagen 200 durch den Kinderwagen 100 gezogen und gelenkt. Bei einigen Kinderwagen (nicht dargestellt) ist der Griff auch durch ein Gelenk in seiner Höhe einstellbar, sodass der Einkaufswagen über den Kinderwagengriff geschoben werden kann, ohne dass dieser angehoben werden muss.

Damit nun eine feste und sichere Verbindung zwischen Kinderwagen 100 und Einkaufswagen 200 hergestellt werden kann, die einen sicheren Stand und eine einfache Lenkbarkeit gewährleistet, ist ein am Einkaufswagengriff 230 angeordnetes, den Kinderwagengriff 130 am Einkaufswagengriff 230 fixierendes Arretierungsmittel 240 vorgesehen. Dieses Arretierungsmittel ist insbesondere als um eine Achse drehbar angeordneter Riegel ausgebildet, der auch griffartig gestaltet sein kann.

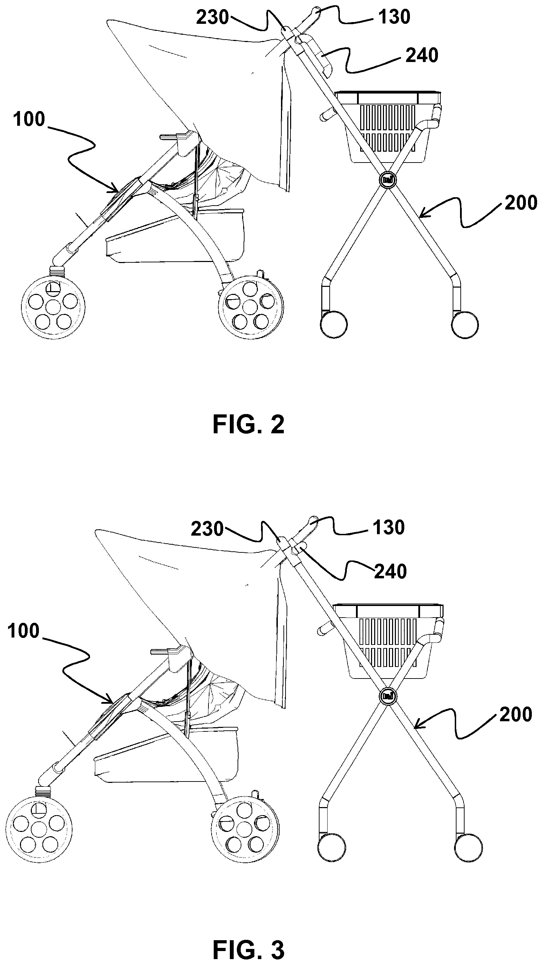

Fig. 2 zeigt eine Seitenansicht des besonders bevorzugt ausgestalteten Systems nach der Erfindung vor der Arretierung des Einkaufswagens am Kinderwagen.

In der in Fig. 2 dargestellten Konfiguration ist das Arretierungsmittel 240 fluchtend mit einem Griffabschnitt des Einkaufswagens 200 ausgerichtet, dass das Verschränken der beiden Griffe 130, 230 nicht durch das Arretierungsmittel 240 behindert wird.

Die Arretierung wird nun dadurch bewirkt, dass das Arretierungsmittel 240 so gedreht wird, dass der Kinderwagengriff 130 zwischen dem Bügel des Einkaufswagengriffs 230 und dem Arretierungsmittel 240 fixiert wird. Fig. 3 zeigt eine Seitenansicht des besonders bevorzugt ausgestalteten Systems nach der Erfindung mit dem am Kinderwagen 100 arretierten Einkaufswagen 200.

## Patentansprüche

1. Waren- und Kindertransportsystem (10) für den Einkauf bestehend aus
- einem Kinderwagen (100) mit
o einem Kinderwagenfahrgestell (110);
o einer in Fahrtrichtung am Kinderwagenfahrgestell (110) angeordneten Sitz- und/oder Liegefläche (120) zur Aufnahme eines Kindes; und
o einem mit dem Kinderwagenfahrgestell (110) verbundenen Kinderwagengriff (130);
- einem mit dem Kinderwagen (100) entgegen der Fahrtrichtung lösbar zu befestigenden Einkaufswagenfahrgestell (210), das zusammenklappbar ausgebildet und zur Aufnahme eines Einkaufskorbs (220) eingerichtet ist; und
- einem zur Aufnahme am Einkaufswagenfahrgestell (210) eingerichteten, mit einem Einkaufskorbgriff versehenen Einkaufskorb (220),
wobei der Kinderwagengriff (130) den Lenker des Waren- und Kindertransportsystems (10) bildet und der Einkaufswagen (200) bei Bewegung des Waren- und Kindertransportsystems (10) in Fahrtrichtung vom Kinderwagen (100) gezogen wird.

2. Waren- und Kindertransportsystem (10) nach Anspruch 1, **dadurch gekennzeichnet, dass** der Einkaufswagen (200) einen mit dem Einkaufswagengestell (210) verbundenen Einkaufswagengriff (230) aufweist.

3. Waren- und Kindertransportsystem (10) nach Anspruch 2, **dadurch gekennzeichnet, dass** Waren- und Kindertransportsystem (10) durch Verbindung des Einkaufswagengriffs (230) mit dem Kinderwagengriff (130) mittels Verschränken der beiden Griffe (230, 130) miteinander gebildet ist.

4. Waren- und Kindertransportsystem (10) nach einem der Ansprüche 2 und 3, **dadurch gekennzeichnet, dass** der Kinderwagengriff (130) und/oder der Einkaufswagengriff (230) als Bügel ausgebildet sind.

5. Waren- und Kindertransportsystem (10) nach einem der Ansprüche 2 bis 4, **gekennzeichnet durch** ein am Einkaufswagengriff (230) angeordnetes, den Kinderwagengriff (130) am Einkaufswagengriff (230) fixierendes Arretierungsmittel (240).

6. Waren- und Kindertransportsystem (10) nach Anspruch 5, **dadurch gekennzeichnet, dass** das Arretierungsmittel (240) als um eine Achse drehbar angeordneter Riegel ausgebildet ist.

7. Waren- und Kindertransportsystem (10) nach Anspruch 1, **gekennzeichnet durch** ein Verbindungsmittel zur lösbaren Befestigung des Einkaufswagens (200) am Kinderwagen (100).

8. Waren- und Kindertransportsystem (10) nach einem der vorhergehenden Ansprüche, **dadurch gekennzeichnet, dass** der Kinderwagen (100) ein Kombi-Kinderwagen, ein Buggy, ein Roller-Buggy, ein Reha-Buggy, ein Krippenwagen oder ein Rehawagen ist.

9. Waren- und Kindertransportsystem (10) nach einem der vorhergehenden Ansprüche, **gekennzeichnet durch** eine Korbstapeleinrichtung zum Bereithalten von Einkaufskörben (220) und/oder eine Halterung zum Vorhalten zusammengeklappter Einkaufswagenfahrgestelle (210).
